Europäisches Patentamt

European Patent Office

Office européen des brevets

(19)

(11) **EP 0 821 246 A1**

# (12) DEMANDE DE BREVET EUROPEEN

(43) Date de publication:
28.01.1998 Bulletin 1998/05

(51) Int Cl.⁶: **G01S 17/32**

(21) Numéro de dépôt: **97401750.1**

(22) Date de dépôt: **21.07.1997**

(84) Etats contractants désignés:
**AT BE CH DE DK ES FI FR GB GR IE IT LI LU MC NL PT SE**

(30) Priorité: **23.07.1996 FR 9609227**

(71) Demandeur: **COMMISSARIAT A L'ENERGIE ATOMIQUE**
**75015 Paris Cédex 15 (FR)**

(72) Inventeurs:
• **Nerin, Philippe**
**38170 Seyssinet (FR)**

• **Besesty, Pascal**
**38410 Vaulnaveys Le Haut (FR)**
• **Giraud, Hervé**
**38120 Saint-Egreve (FR)**
• **Mouttet, André**
**38170 Seyssinet (FR)**

(74) Mandataire: **Dubois-Chabert, Guy et al**
**c/o BREVATOME**
**25, rue de Ponthieu**
**75008 Paris (FR)**

## (54) Vélocimètre à laser à détection autodyne

(57) Vélocimètre à laser autodyne comprenant :

- un microlaser (10), apte à émettre respectivement un premier (40) et un deuxième (42) faisceaux,
- des moyens de pompage (12) aptes à fournir au microlaser une lumière de pompage,
- des moyens optique (14) aptes à envoyer le premier faisceau (40) sur une cible (50) et à envoyer de la lumière réémise par la cible (50) dans le microlaser (10),
- un moyen de détection photoélectrique (16) pour recevoir le deuxième faisceau et émettre un signal de détection correspondant à une modulation d'intensité du deuxième faisceau, et
- des moyens (17) de traitement du signal de détection pour déterminer une grandeur caractéristique d'une vitesse de déplacement de la cible.

Application à la métrologie.

FIG. 1

EP 0 821 246 A1

## Description

Domaine technique

La présente invention concerne un vélocimètre à laser à détection autodyne. On entend par vélocimètre un dispositif de mesures précises de vitesses, de vibrations ou de déplacements.

Par ailleurs, on considère que la détection est autodyne lorsque le laser est utilisé à la fois comme émetteur et comme récepteur de lumière.

L'invention trouve des applications dans des domaines très variés comme l'instrumentation médicale, la métrologie, la détection de polluants, l'automobile ou la microscopie. Plus généralement, l'invention trouve des applications pour toute mesure à distance, et sans contact physique, de vibration de déplacement ou bien de vitesse d'une cible quelconque.

Etat de la technique antérieure

De façon générale, pour effectuer une mesure de la vitesse de déplacement d'une cible par faisceau laser, on envoie sur la cible à partir d'une source laser un faisceau de lumière cohérente, dit faisceau d'émission, et on recueille un faisceau réfléchi ou diffusé par la cible et désigné par faisceau de mesure. Un système optique est prévu pour faire interférer le faisceau de mesure et le faisceau d'émission sur un détecteur photoélectrique. Puis, une grandeur caractéristique de la vitesse de déplacement, telle que la fréquence Doppler liée au mouvement de la cible, est déterminée par un système de traitement du signal photoélectrique.

Un tel système de vélocimétrie, dit à détection cohérente, présente un certain nombre de difficultés de mise en oeuvre.

Une première difficulté est liée à l'alignement et au parallélisme des faisceaux d'émission et de mesure que l'on souhaite faire interférer. En effet, un grand nombre de lasers émettent un faisceau de lumière dont la longueur d'onde est voisine de 1 μm. Or, pour de telles longueurs d'onde une erreur d'alignement ou de parallélisme des faisceaux, même très légère, compromet l'interférence des faisceaux et rend la mesure de vitesse impossible.

Une autre difficulté des systèmes de vélocimétrie à détection cohérente est liée à la perte de cohérence du faisceau ayant rencontré la cible dont on mesure le déplacement. Une mesure par interférence des faisceaux d'émission et de mesure nécessite en effet une bonne cohérence de ces signaux. Or, la rencontre du faisceau d'émission avec un milieu fortement désordonné, ou l'interaction du faisceau d'émission avec la cible, provoque une perte de cohérence du faisceau de mesure.

Cette difficulté nécessite l'utilisation de systèmes optiques complexes pour rétablir la cohérence du faisceau de mesure ou pour filtrer ce faisceau.

Une troisième difficulté pour les systèmes de vélocimétrie à laser tient aux contraintes liées à la sécurité oculaire de l'utilisateur. En effet, le faisceau d'émission doit avoir une puissance suffisamment faible pour ne pas constituer de danger pour les yeux d'un utilisateur. L'énergie du faisceau de mesure ou des signaux optiques en provenance de la cible est donc particulièrement faible.

Ces contraintes entraînent un rapport signal sur bruit de la mesure qui est généralement très faible. Pour pallier ces limitations, des dispositifs optiques sophistiqués et un système électronique de très faible bruit doivent être utilisés. Ces mesures rendent alors le vélocimètre à laser coûteux.

Finalement, on constate qu'à l'heure actuelle très peu de dispositifs fonctionnent selon le principe de la détection cohérente avec des faisceaux de longueur d'onde de l'ordre du micromètre. Pourtant, les sources laser d'une telle longueur d'onde sont facilement disponibles dans le commerce.

Une manière de résoudre les problèmes évoqués ci-dessus consiste à utiliser le laser à la fois comme émetteur et comme récepteur de lumière.

Ainsi, grâce au principe de retour inverse de la lumière, les faisceaux d'émission et de mesure sont nécessairement alignés.

Ce principe de détection est connu sous le nom de détection autodyne ou sous la désignation de "Self-Mixing". On peut se reporter à ce sujet au document (1) dont la référence est indiquée à la fin de la présente description.

Un dispositif à détection autodyne comprenant un laser à gaz est aussi décrit dans le document (2) dont la référence est également indiquée à la fin de la présente description.

Le principe de détection autodyne utilise diverses propriétés physiques du milieu amplificateur pour réaliser un moyen efficace de détection. On peut de façon simplifiée résumer le processus physique de la manière suivante : lorsqu'une infime partie de lumière émise par le laser retourne dans celui-ci après réflexion ou diffusion sur une cible en mouvement, une modulation de l'intensité du laser est observée. La modulation d'intensité est due à des effets non-linéaires présents dans le milieu amplificateur, tels que, par exemple, les effets de saturation. La modulation d'intensité comporte la fréquence Doppler caractéristique de la cible en déplacement. Le traitement approprié du signal émis par un détecteur mesurant la modulation d'intensité permet ainsi de remonter à la vitesse ou au déplacement de la cible qui intercepte le faisceau laser.

Les documents (3) et (4) dont les références sont indiquées à la fin de la présente description montrent des dispositifs mettant en oeuvre le principe de la détection homodyne avec amplification de lumière.

Ces dispositifs comportent une diode laser qui est une source plus compacte qu'un laser à gaz. On rappelle que les faces opposées de la cavité d'une diode laser constituent deux miroirs de fort coefficient de transmission (de l'ordre de 70%). Ces miroirs sont obtenus par clivage d'un bloc de semi-conducteur. Par ailleurs, on peut noter que les coefficients de transmission des deux faces opposées de la diode laser sont sensiblement identiques.

Ainsi, dans un montage optique où une diode laser est disposée entre des moyens de détection photoélectriques et une cible de mesure, la lumière directe en provenance de la cible traverse la diode laser et atteint les moyens de détection photoélectriques. Ceci est possible grâce au fort coefficient de transmission des faces opposées de la diode laser. Le signal en provenance de la cible est amplifié lors de sa traversée de la cavité laser, ce qui permet un bon rapport signal sur bruit. Dans un tel cas, la détection est appelée détection homodyne.

L'utilisation d'une diode laser constitue un avantage majeur pour des applications industrielles. Cependant, lorsque la cible renvoie trop de lumière dans la cavité d'une diode laser, des instabilités importantes d'intensité rendent la mesure de la modulation d'intensité impossible.

Les instabilités sont notamment dues à un couplage trop important de la cavité de la diode laser avec la cible. Ceci provient du fort coefficient de transmission, de l'ordre de 70%, du miroir de sortie des diodes laser.

Une autre cause de l'instabilité est le gain élevé dans la cavité des diodes laser : celui-ci est de l'ordre de 100 cm$^{-1}$ pour des diodes lasers communément disponibles dans le commerce.

Une troisième cause de l'instabilité des diodes laser est le couplage non-linéaire des électrons et des photons. Ce couplage est caractérisé par un coefficient $\alpha$ qui peut être compris comme une mesure de non-linéarité du laser. Le coefficient $\alpha$, proportionnel à la dérivée partielle de l'indice n du milieu actif par rapport au nombre N d'inversion de population dans le laser, est de l'ordre de 3 à 7 pour les diodes laser communément disponibles dans le commerce.

Les phénomènes de non-linéarité et d'instabilité des diodes laser sont décrits plus en détail dans le document (5) dont la référence est indiquée à la fin de la présente description.

Les problèmes d'instabilité rendent nécessaire l'usage d'un laser ayant des miroirs de réflectivités élevées, un matériau amplificateur dont le gain est relativement faible, et ayant un coefficient a le plus petit possible. Otsuka et Okamoto et coll. ont réalisé des mesures précises de vitesse en utilisant des lasers de type microchip (microlaser). On peut se reporter à ce sujet aux documents (6) et (7) dont les références sont indiquées à la fin de la présente description. L'utilisation de ce type de laser résout les problèmes d'instabilité inhérents à l'usage des diodes lasers. En effet dans les microlasers, le miroir de sortie présente un faible coefficient de transmission, de l'ordre de 1 à 5%, le gain présent dans la cavité laser est faible, de l'ordre de 0,1 cm$^{-1}$, et le coefficient a est pratiquement nul.

Le principal inconvénient des dispositifs à microlaser provient du fait que la modulation d'intensité n'est significative que lorsque la fréquence Doppler est proche de la fréquence de relaxation $F_R$ du laser.

La fréquence de relaxation $F_R$ du laser est définie par la relation suivante :

$$F_R = \frac{1}{2\pi} \sqrt{\frac{r-1}{\tau_P \tau_f}}$$

où $\tau_p$ est la durée de vie des photons dans la cavité laser, où $\tau_f$ est la durée de vie de la transition laser et où r est un paramètre du pompage de la cavité laser. Ainsi, pour effectuer une mesure de vitesse, la fréquence de relaxation doit être sans cesse ajustée en fonction de la vitesse de la cible. Dans le document (7), Okamoto et coll. proposent d'ajuster le coefficient de pompage r de façon à accorder la fréquence de relaxation du laser à la fréquence Doppler correspondant au mouvement de la cible. Ces dispositions entraînement une grande complexité des circuits électroniques associés au vélocimètre et ne facilitent pas les mesures.

La présente invention a par conséquent pour but de proposer un vélocimètre à laser ne présentant pas les limitations et les contraintes évoquées ci-dessus.

Un but est en particulier de proposer un vélocimètre à laser ne présentant pas d'instabilité.

Un autre but est de proposer un vélocimètre laser capable de mesurer directement la vitesse d'une cible dans une large gamme de vitesses sans ajuster le paramètre de pompage.

Un but est encore de proposer un vélocimètre à laser ne posant pas de problèmes d'alignement des faisceaux d'émission et de mesure.

Un autre but est de proposer un vélocimètre à laser peu sensible à un éventuel défaut de cohérence du faisceau de mesure.

Un but de l'invention est aussi de proposer un vélocimètre à laser ne présentant pas de problème de diaphonie.

Un but est enfin de proposer un vélocimètre à laser d'une conception simple et peu coûteuse.

Exposé de l'invention

Pour atteindre les buts mentionnés ci-dessus, la présente invention a plus précisément pour objet un vélocimètre à laser à détection autodyne comprenant :

- un microlaser, comprenant un milieu à gain, avec une première et une deuxième faces d'émission opposées, apte à émettre respectivement un premier et un deuxième faisceau, respectivement par les première et deuxième faces, la deuxième face d'émission présentant un coefficient de transmission inférieur à un coefficient de transmission de la première face,

- des moyens de pompage aptes à fournir au microlaser une lumière de pompage,

- des moyens optique aptes à envoyer le premier faisceau sur une cible et à envoyer de la lumière réémise par la cible dans le microlaser,
- des moyens de détection photoélectriques pour recevoir le deuxième faisceau et émettre un signal de détection, et
- des moyens de traitement du signal de détection pour déterminer une grandeur caractéristique d'une vitesse de déplacement de la cible.

Selon un aspect particulier, les moyens de traitement peuvent être prévus pour déterminer une fréquence Doppler caractéristique du déplacement de la cible et pour calculer une grandeur choisie parmi une fréquence de vibration de la cible, un déplacement de la cible et une vitesse de la cible.

Au sens de la présente invention, on entend par microlaser un laser à émission continue ayant un matériau actif amplificateur solide, généralement sous la forme d'un cristal. Un tel laser doit être pompé par une source de lumière de pompage extérieure.

Le microlaser utilisé dans le vélocimètre se distingue d'une diode laser dont le matériau actif est semiconducteur et qui est pompé électriquement.

Le microlaser émet un premier faisceau de lumière vers la cible et reçoit la lumière réémise, c'est-à-dire réfléchie ou diffusée par la cible. Cette lumière, par le principe du retour inverse, traverse les mêmes moyens optiques qui servent à envoyer le premier faisceau d'émission sur la cible.

Ainsi, il n'y a pas de désalignement entre la lumière émise du premier faisceau et la lumière de mesure renvoyée par la cible. Il est par conséquent possible d'effectuer des mesures avec une lumière de petite longueur d'onde.

Les deux faces opposées du microlaser constituent des miroirs dont les coefficients de transmission de la lumière sont très différents. La première face, en regard de la cible, présente, à la longueur d'onde du laser, un coefficient de transmission de l'ordre de 50% à 95% (0,5 à 0,95). Par contre, le coefficient de transmission de la deuxième face, tournée vers les moyens de détection, présente un coefficient de transmission, inférieur à 5% et, de préférence inférieur à 1%.

Le très faible coefficient de transmission de la deuxième face et la différence entre les coefficients de transmission des première et deuxième faces opposées permettent d'isoler optiquement les moyens de détection photoélectrique de la lumière directe provenant de la cible. La lumière en provenance de la cible, injectée dans le microlaser, modifie les propriétés de la cavité du microlaser et agit sur l'oscillation stationnaire existant dans la cavité.

Le milieu à gain du microlaser réalise ainsi une démodulation et une amplification des signaux optiques.

Le deuxième faisceau, dirigé vers les moyens de détection photoélectrique s'apparente à un faisceau de fuite qui traduit l'état d'oscillation de la cavité du microlaser.

Ainsi, dans le cas de l'invention, le vélocimètre fonctionne selon un principe de détection dit autodyne.

Le principe de détection autodyne ne nécessite qu'une quantité très faible de lumière et permet donc au vélocimètre de fonctionner avec des faisceaux de faible intensité, compatibles avec les normes de sécurité oculaire de l'utilisateur.

Le microlaser a également un rôle de filtrage spatial de la lumière provenant de la cible. En effet, le mode du laser constitue un filtre spatial qui rejette la lumière non cohérente en provenance de la cible. Le filtrage spatial fourni par le microlaser est lié en particulier à la forme du faisceau de pompage émis par les moyens de pompage. Ainsi, le microlaser permet d'éviter les problèmes de cohérence entre la lumière du faisceau d'émission et la lumière renvoyée par la cible.

La modulation d'intensité du microlaser, provoquée par la lumière provenant de la cible, est mesurée, conformément à l'invention, non pas dans le système optique du faisceau de mesure, c'est-à-dire ici le premier faisceau, mais par l'intermédiaire d'un deuxième faisceau émis par le laser.

Le premier et le deuxième faisceaux sont émis par des faces d'émission opposées du microlaser. Cette caractéristique permet, comme indiqué ci-dessus, d'isoler optiquement le système optique du premier faisceau et le système optique du deuxième faisceau servant à la détection. Cette caractéristique est très intéressante car elle permet d'éviter un phénomène dit de diaphonie, c'est-à-dire le mélange entre la lumière d'émission vers la cible et la lumière réfléchie sur la face avant du détecteur. Cette propriété est obtenue en choisissant un microlaser ayant un miroir de grande réflectivité du côté du détecteur.

Selon un aspect particulier de l'invention, qui peut être considéré comme un perfectionnement du système décrit ci-dessus, le vélocimètre peut être équipé d'un microlaser apte à émettre des faisceaux de lumière comprenant respectivement deux ondes électromagnétiques polarisées linéairement et orthogonalement. Dans ce cas, le vélocimètre comporte également un analyseur disposé sur un chemin optique du deuxième faisceau, dirigé vers les moyens de détection.

Cette caractéristique, particulièrement avantageuse, permet la détection d'une fréquence Doppler dans un spectre très large de fréquences allant de la fréquence nulle à plusieurs centaines de kilohertz sans effectuer aucun réglage du pompage du laser, c'est-à-dire sans ajuster la fréquence de relaxation.

A titre d'exemple, avec un microlaser du type Nd: YAG une détection très sensible peut être effectuée sur une plage de 0 à 100 kHz.

Ainsi, des déplacements d'une cible dans une large gamme de vitesses peuvent être détectés et mesurés. Il est en particulier possible de mesurer la fréquence Doppler dans une gamme correspondant aux fréquences audibles.

L'analyseur placé sur le chemin optique du deuxième faisceau a essentiellement pour fonction d'éteindre l'une des deux ondes électromagnétiques orthogonale ou linéaire du deuxième faisceau avant qu'il n'atteigne les moyens de détection.

Ceci évite que les deux ondes, en opposition de phase, ne soient annulées l'une par l'autre sur les moyens de détection usuels qui ne sont pas sensibles à la phase et à la polarisation des ondes détectées.

Afin d'émettre un faisceau comprenant deux ondes polarisées linéairement et orthogonalement, le microlaser peut comporter un matériau amplificateur intrinsèquement biréfringent.

Il s'agit, par exemple, d'un cristal intrinsèquement biréfringent clivé selon un plan C (C-cut). Le cristal peut, par exemple, être choisi parmi le $YLiF_4$, le $LaMgAl_{11}O_9$ et le $YVO_4$ dopé au néodyme (noté $YVO_4$:Nd).

Le matériau amplificateur peut aussi être un cristal isotrope, par exemple du type YAG:Nd, qui a subi lors de sa cristallogénèse une contrainte lui conférant le caractère biréfringent.

Le matériau amplificateur peut également être soumis en permanence à une contrainte mécanique perpendiculaire à l'axe des premier et deuxième faisceaux, afin de provoquer la biréfringence.

D'autres caractéristiques et avantages de la présente invention ressortiront mieux de la description qui va suivre, en référence aux dessins annexés, donnée à titre purement illustratif et non limitatif.

Brève description des figures

- la figure 1 est une vue schématique d'un premier mode de réalisation d'un vélocimètre à laser conforme à l'invention,
- la figure 2 est une vue schématique d'un deuxième mode de réalisation d'un vélocimètre à laser conforme à l'invention,
- la figure 3 est une vue schématique d'un troisième mode de réalisation d'un vélocimètre à laser conforme à l'invention,
- la figure 4 représente le signal délivré par un détecteur photoélectrique en réponse à un déplacement d'une cible,
- la figure 5 représente la transformée de Fourrier du signal de la figure 3, délivrée par un analyseur de fréquence relié au détecteur.

Description détaillée de modes de réalisation de l'invention

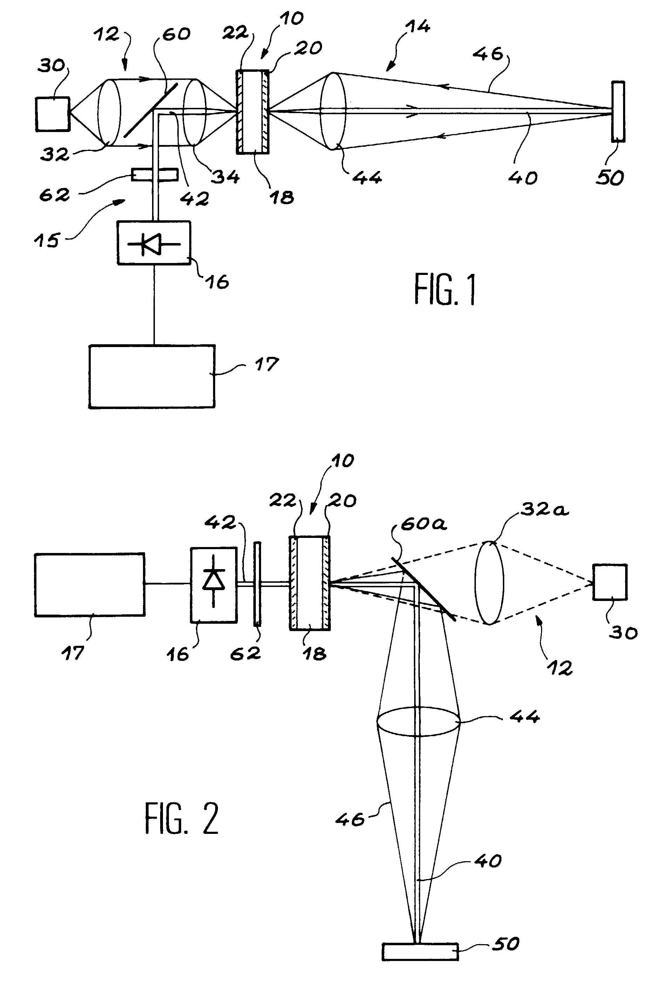

La figure 1 illustre un premier mode de réalisation du vélocimètre. Le vélocimètre comporte un microlaser continu 10, par exemple du type YAG:Nd dont la puissance d'émission est de l'ordre de 1 mW. Il comporte également, des moyens de pompage 12 du microlaser 10, un système optique de mesure 14 et un système optique de détection 15.

Le microlaser 10 comporte un milieu actif amplificateur à gain 18 et deux miroirs 20 et 22 disposés de part et d'autre du matériau actif. Le matériau actif du microlaser est choisi pour être biréfringent de façon à pouvoir émettre deux ondes électromagnétiques polarisées linéairement et orthogonalement, notées S et P. De préférence le matériau peut être choisi de telle façon qu'aucune des polarisations des ondes S ou P ne soit privilégiée, mais qu'elles présentent des amplitudes du même ordre de grandeur, cas du matériau YAG:Nd. Ceci ne constitue cependant pas un impératif.

Les ondes électromagnétiques S et P sont caractérisées par leurs fréquences optiques très voisines notées $\nu_s$ et $\nu_p$, ceci est avantageux pour que le couplage des deux modes soit important, par exemple $\nu_s - \nu_p \approx 50 MHz$

Les miroirs 20 et 22 forment respectivement les première et deuxième faces d'émission du laser. Ils constituent un résonateur optique. Ces miroirs sont caractérisés en particulier par leur réflectivité aux longueurs d'onde $\lambda_S = \frac{c}{\nu_S}$, $\lambda_P = \frac{c}{\nu_P}$ où c est la célérité de la lumière, et à la longueur d'onde de pompage $\lambda_L$.

A titre indicatif, pour le miroir 20, la réflectivité $R_{20}$ peut être choisie, par exemple, telle que $R_{20}(\lambda_S) = R_{20}(\lambda_P) = 0,95$.

Pour le miroir 22, la réflectivité $R_{22}$ peut être choisie telle que $R_{22}(\lambda_S) = R_{22}(\lambda_P) > 0,99$ et $R_{22}(\lambda_L) < 0,01$.

Les moyens 12 de pompage du laser comportent, dans l'exemple illustré, une diode de pompage 30, telle que, par exemple, une diode laser d'une longueur d'onde de $0,8\,\mu m$. Les moyens de pompage présentent également un système optique pour focaliser la lumière de pompage sur le microlaser. Le système optique comprend deux lentilles portant les références 32 et 34.

Lorsque le pompage optique fourni par les moyens de pompage 12 dépasse un certain seuil, le microlaser émet deux faisceaux laser. Le seuil de pompage pour l'émission des faisceaux dépend non seulement du matériau amplificateur 18 mais aussi des miroirs 20 et 22.

Les faisceaux du microlaser sont respectivement émis par les première et deuxième faces du laser et sont désignés par premier et deuxième faisceaux. Les premier et deuxième faisceaux, colinéaires, portant respectivement les références 40 et 42, sont émis dans des sens opposés.

Le premier faisceau 40 est dirigé vers une cible 50, dont on souhaite déterminer, par exemple, le spectre de vibration ou la vitesse de déplacement, par l'intermédiaire du système optique de mesure 14. La cible 50 peut être coopérative, c'est-à-dire un matériau réfléchissant la lumière ou non-coopérative, c'est-à-dire un matériau diffusant la lumière.

Dans l'exemple de la figure 1, le système optique 14 comporte une lentille 44 ayant une distance focale F et disposée à une distance du microlaser 10 sensiblement égale à la distance focale F. La lentille 44 a pour fonction de collimater le premier faisceau laser 40 émis par le microlaser 10. Elle a aussi pour fonction de focaliser la lumière réfléchie ou diffusée par la cible dans le microlaser qui constitue également un récepteur de lumière. Des rayons de lumière 46 représentés sur la figure symbolisent la lumière réémise par la cible 50.

Le deuxième faisceau 42, émis par le microlaser 10, par la deuxième face, est dirigé vers le moyen de détection photoélectrique 16 par le système optique de détection 15.

Ce système optique de détection, dont fait partie également la cavité 10 qui est un récepteur et un amplificateur pour la lumière réémise par la cible, comporte une lame 60. Celle-ci est disposée entre la source de lumière de pompage et la deuxième face du laser, plus précisément, entre les lentilles 32 et 34. La lame 60 est, sensiblement transparente pour la longueur d'onde $\lambda_L$ (0,8 $\mu$m) de la lumière de pompage et réfléchissante pour les longueurs d'ondes très voisines $\lambda_S$ et $\lambda_P$ ($\simeq$1,06 $\mu$m) des deux ondes émises par le microlaser 10. Il s'agit par exemple d'une lame dichroïque dont la réflexion est maximale à une longueur d'onde de 1,06 $\mu$m et dont la transmission est maximale à 0,8 $\mu$m.

La lame 60 permet de dévier le deuxième faisceau 42, initialement colinéaire au premier faisceau 40, vers les moyens de détection photoélectriques.

Le système optique de détection comporte également, en commun avec les moyens de pompage, la lentille 34 pour collimater ou focaliser sur les moyens de détection 16 le deuxième faisceau 42.

Enfin, le système optique de détection 15 comporte un analyseur (polariseur) 62 disposé en amont du détecteur photoélectrique 16 pour éteindre l'une des ondes électromagnétiques S ou P du deuxième faisceau 42.

Les moyens de détection photoélectriques 16 comportent par exemple, une photodiode PIN, apte à transformer le signal lumineux reçu en un signal électrique.

Le signal électrique est fourni à des moyens de traitement du signal 17 décrits plus loin.

Il convient de noter que dans le dispositif de la figure 1, la lumière 46 réfléchie ou diffusée par la cible n'atteint pas directement les moyens de détection 16. Cette lumière est reçue par le microlaser et est arrêtée pour l'essentiel par le miroir 22 formant la deuxième face du laser. Les moyens de détection 16 sont ainsi, dans une large mesure, isolés optiquement de la lumière provenant de la cible. Réciproquement, le microlaser est peu perturbé par la lumière diffusée et réfléchie sur le détecteur.

La figure 2 est une variante de réalisation du vélocimètre de l'invention. Sur cette figure des parties identiques ou similaires à celles de la figure 1 portent les mêmes références. On peut donc se référer à leur sujet à la description qui précède.

Dans le dispositif de la figure 2, les moyens de pompage 12, le laser 10 et les moyens de détection 16 sont alignés selon un même axe.

Les moyens de pompage comportent une lentille 32 pour focaliser sur le laser 10 la lumière de pompage.

Entre la première face du laser 10 et la source de lumière de pompage 30 est disposée une lame 60a sensiblement transparente à la longueur d'onde $\lambda_L$ de la lumière de pompage et réfléchissante pour les longueurs d'onde $\lambda_S$ et $\lambda_P$ du premier faisceau 40.

La lame 60a fait partie du système optique de mesure et dévie le premier faisceau 40 hors de l'axe du laser, vers la cible 50. Le système de mesure comporte également une lentille 44 qui, comme dans le dispositif de la figure 1, permet de focaliser la lumière réémise par la cible 50 sur le microlaser 10.

Dans le dispositif de la figure 2, le système optique de détection ne comprend, outre le laser 10, qu'un analyseur 62. Les moyens de détection photoélectriques 16 interceptent en effet directement le deuxième faisceau 42 du laser lorsqu'il a traversé l'analyseur. Tout comme dans le dispositif de la figure 1, les moyens de détection et la cible sont sur des côtés opposés du microlaser.

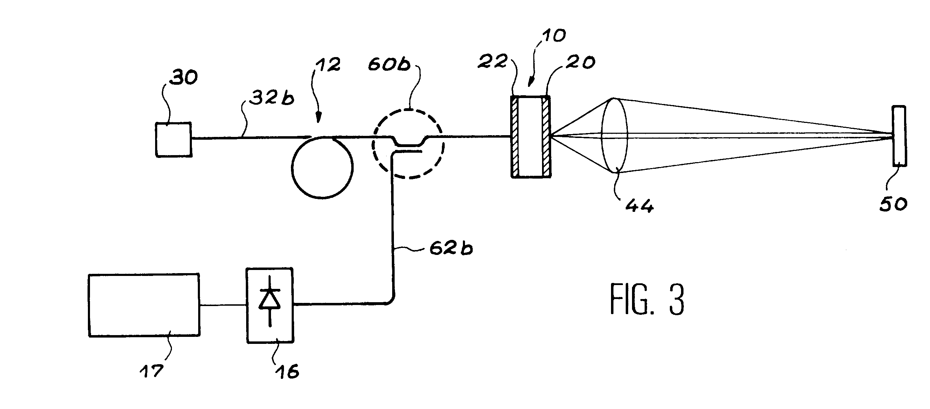

La figure 3 est une vue schématique d'un troisième mode de réalisation d'un vélocimètre à laser conforme à l'invention.

Sur cette figure des parties identiques ou similaires à celles des figures 1 et 2 portent les mêmes références.

Les moyens de pompage 12 comportent une diode laser de pompage 30 couplée à une fibre optique de pompage 32b. La lumière de pompage émise à une longueur d'onde $\lambda_L$, est collectée par la fibre optique 32b, traverse un coupleur optique 60b et pompe le microlaser 10. Le microlaser 10 joue le rôle d'émetteur et de récepteur.

Le faisceau émis par la face formée par le miroir 22 est collecté par la fibre 32b et entre dans le coupleur 60b. Une partie du deuxième faisceau émis par le microlaser est envoyée dans une fibre de mesure 62b, par l'intermédiaire du coupleur 60b, puis sur les moyens de détection photoélectriques 16. Le système optique de détection 15 comprend ainsi le coupleur optique 60b et la fibre optique de mesure 62b. Cette fibre optique peut, dans le mode de perfectionnement décrit précédemment, et qui utilise deux ondes polarisées linéaire et orthogonale, être une fibre à maintien de polarisation. Ceci ne constitue cependant pas un impératif.

Ce mode de réalisation est particulièrement intéressant car il est compatible avec une approche microsystème fort utile dans le domaine biomédical. Dans cette version "tout fibre optique" l'ensemble constitué du microlaser 10 et de la lentille 44 constitue une sonde optique de très faibles dimensions pouvant être introduite dans le corps humain. Dans ce type d'application, la lentille peut être une microlentille. Cette dernière version de capteur est particulièrement intéressante pour des applications industrielles diverses de par sa simplicité de réalisation et d'utilisation. La sonde ainsi réalisée peut être introduite dans des endroits difficiles d'accès.

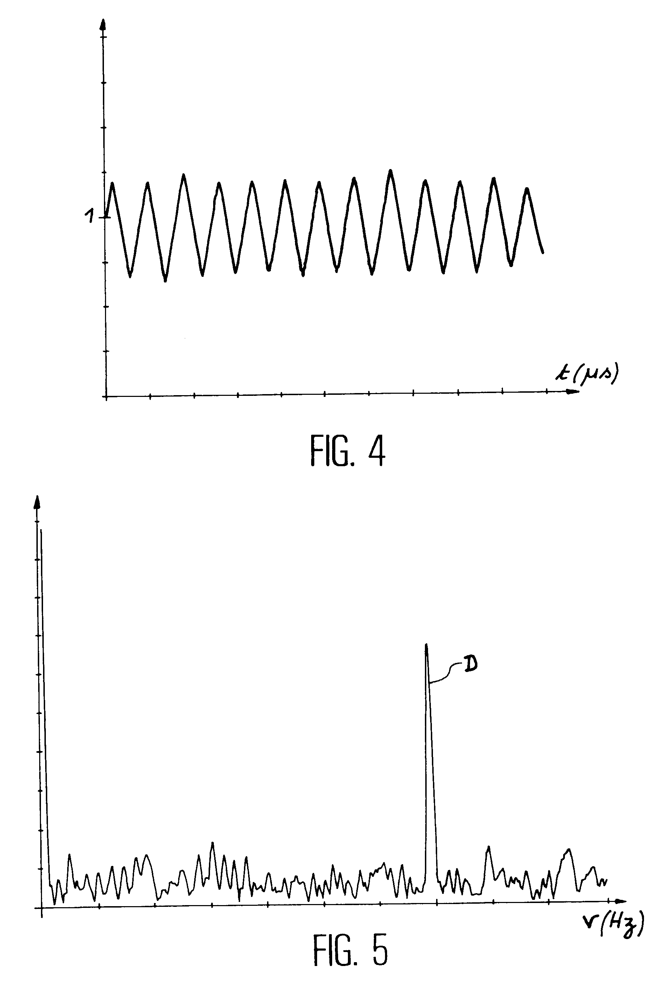

Il convient à présent d'expliquer brièvement le fonctionnement des moyens de traitement du signal 17, à l'aide des figures 4 et 5.

La figure 4 représente le signal électrique fourni par les moyens de détection photoélectriques 16 en réponse à une cible se déplaçant à une vitesse donnée. L'amplitude du signal électrique est reportée, en échelle arbitraire, en ordonnée et le temps, en microsecondes, est reporté en abscisse sur le graphique de la figure 4.

Lorsque le vélocimètre est utilisé comme un capteur de déplacement, le traitement du signal consiste à compter le nombre d'alternances du signal. Chaque alternance correspond à deux maximums successifs, ou bien deux minimums successifs, et correspond à un déplacement de la cible de $\lambda/2$ où $\lambda$ est la longueur d'onde du laser ($\lambda \simeq \lambda_S \simeq \lambda_P$). Ainsi si K alternances sont comptées le déplacement d de la cible d'écrit :

$$d = K.\lambda/2.$$

Le comptage de ces alternances peut être réalisé avec un compteur électronique. Les alternances du signal sont représentées à la figure 4.

Lorsque le vélocimètre est utilisé comme capteur de vitesse ou bien de mesure de vibration, le signal électrique est traité par une unité de transformée de Fourrier rapide (FFT) qui fait partie des moyens de traitement 17, pour obtenir le signal représenté à la figure 5. Ce signal présente un pic D qui correspond à la fréquence Doppler associée à la vitesse de déplacement de la cible. L'amplitude de la transformée de Fourrier, reportée en ordonnée et la fréquence reportée en abscisse sont indiquées en échelle arbitraire.

Les moyens de traitement 17 peuvent comporter éventuellement un calculateur apte à calculer à partir de la fréquence Doppler la vitesse V de la cible. La vitesse V peut être calculée selon la formule : $V = \frac{v_D \lambda}{2}$, où $v_D$ est la fréquence Doppler et $\lambda$ la longueur d'onde du laser ($\lambda \simeq \lambda_S \simeq \lambda_P$).

Dans une réalisation particulière, les moyens de traitement du signal peuvent comporter un analyseur de spectre radiofréquence.

## DOCUMENTS CITES

(1)

Laser-amplifier gain and noise, R. Loudon and M. Harris et coll., Physical Review A, vol 48, number 1, p 681-700, July 93.

(2)

US-A-3 409 370

(3)

US-A-4 928 152

(4)

P.J. de Groot et Coll., Backscatter modulation semiconductor laser radar, SPIE, vol. 1103, Laser Radar IV (1989).

(5)

K. Otsuka, Nonlinear phenomena in semiconductor lasers, SPIE, vol. 1497, pp. 432-443.

(6)

K. Otsuka, Ultrahigh sensivity laser Doppler velocimetry with a microchip solid-state laser, Applied Optics, 20 Fev. 1994, vol. 33, n°6.

(7)

Okamoto et coll., Ultrahighly sensitive laser-Doppler velocity meter with a diode-pumped Nd: YVO4 microchip laser, Rev. Sci. Instrum. 66(5), May 1995, pp. 3116-3120.

## Revendications

1. Vélocimètre à laser à détection autodyne comprenant :

   - un microlaser (10) avec une première (20) et une deuxième (22) faces d'émission opposés, apte à émettre respectivement un premier (40) et un deuxième (42) faisceaux, respectivement par les première et deuxième faces (20, 22), la deuxième face d'émission présentant un coefficient de transmission inférieur à un coefficient de transmission de la première face,
   - des moyens de pompage (12) aptes à fournir au microlaser une lumière de pompage,
   - des moyens optique (14) aptes à envoyer le premier faisceau (40) sur une cible (50) et à envoyer de la lumière réémise par la cible (50) dans le microlaser (10),
   - des moyens de détection photoélectriques (16) pour recevoir le deuxième faisceau (42) et émettre un signal de détection, et
   - des moyens (17) de traitement du signal de détection pour déterminer une grandeur caractéristique d'une vitesse de déplacement de la cible.

2. Vélocimètre selon la revendication 1, caractérisé en ce que les moyens de traitement sont aptes à déterminer une fréquence Doppler caractéristique du déplacement de la cible et à calculer une grandeur choisie parmi une fréquence de vibration de la cible, un déplacement de la cible et une vitesse de la cible.

3. Vélocimètre à laser selon la revendication 1, caractérisé en ce qu'il est équipé d'un microlaser (10) apte à émettre des faisceaux de lumière comprenant respectivement deux ondes électromagnétiques polarisées linéairement et orthogonalement et en ce qu'il comporte un analyseur (62) disposé sur un chemin optique du deuxième faisceau (42) dirigé vers les moyens de détection.

4. Vélocimètre à laser selon la revendication 3, caractérisé en ce que le microlaser (10) comporte un matériau amplificateur (18) intrinsèquement biréfringent pour émettre lesdites deux ondes électromagnétiques.

5. Vélocimètre à laser selon la revendication 3, caractérisé en ce que le matériau amplificateur (18) est un cristal intrinsèquement biréfringent clivé selon un plan C (C-cut).

6. Vélocimètre selon la revendication 5, caractérisé en ce que le cristal est choisi parmi le $YVO_4$, le $YLiF_4$ et le $LaMgAl_{11}O_9$.

7. Vélocimètre à laser selon la revendication 4, caractérisé en ce que le matériau amplificateur (18) est un cristal ayant subi une contrainte lors de sa cristallogénèse.

8. Vélocimètre à laser selon la revendication 3, caractérisé en ce que le microlaser comporte un matériau amplificateur (18) soumis à une contrainte mécanique perpendiculaire aux premier et deuxième faisceaux.

9. Vélocimètre à laser selon la revendication 1, caractérisé en ce que les moyens de pompage (12) comportant une source de lumière de pompage (30) et un système optique (32, 32b, 34) pour focaliser la lumière de pompage sur le microlaser.

10. Vélocimètre à laser selon la revendication 9, caractérisé en ce que le système optique des moyens de pompage comporte une fibre optique (32b) de pompage.

11. Vélocimètre selon la revendication 10, caractérisé en ce qu'il comporte une fibre optique de mesure (62b) reliée aux moyens de détection photoélectriques et couplée à la fibre optique de pompage (32b) par un coupleur optique (60b).

12. Vélocimètre à laser selon la revendication 1, caractérisé en ce que le microlaser (10) comporte un milieu actif constitué d'un matériau amplificateur (18) et deux miroirs (20, 22) formant respectivement les première et deuxième faces d'émission, et constituant un résonateur optique.

13. Vélocimètre à laser selon la revendication 1, caractérisé en ce que les moyens optiques (14) comportent une lentille (44) avec une distance focale (F), la lentille étant disposée devant la première face (20) et à une distance de cette face sensiblement égale à la distance focale (F).

14. Vélocimètre à laser selon la revendication 1, caractérisé en ce que les moyens de détection photoélectriques (16) comportent une photodiode de type PIN.

15. Vélocimètre à laser selon la revendication 1, caractérisé en ce que les moyens de traitement du signal (17) de détection comportent un analyseur de spectre radiofréquence.

16. Vélocimètre selon la revendication 1, caractérisé en ce qu'il comporte une lame (60) sensiblement transparente à une longueur d'onde du moyen de pompage (12) et réfléchissante pour le deuxième faisceau (42) émis par le microlaser (10), la lame étant disposée entre une source de lumière de pompage (30) et la deuxième face (22) du microlaser (10) pour dévier le second faisceau (42) vers les moyens de détecteur (16).

17. Vélocimètre selon la revendication 1, caractérisé en ce qu'il comporte une lame (60a) sensiblement transparente à la longueur d'onde des moyens de pompage (12) et réfléchissante pour le premier faisceau (40) émis par le microlaser (10), la lame étant disposée entre une source de lumière de pompage et la première face du microlaser pour dévier le premier faisceau vers la cible.

FIG. 1

FIG. 2

FIG. 3

EP 0 821 246 A1

FIG. 4

FIG. 5

**Office européen des brevets**

## RAPPORT DE RECHERCHE EUROPEENNE

Numéro de la demande

EP 97 40 1750

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | GB 2 108 348 A (COMPAGNIE INDUSTRIELLE DES LASERS CILAS ALCATEL ET AL) * page 1, ligne 87 - page 2, ligne 2; figure 1 * | 1-3 | G01S17/32 |
| Y | US 5 500 729 A (B. C. REDMAN ET AL) * colonne 4, ligne 30 - ligne 50; figure 2 * | 1-3 | |
| Y | US 5 473 626 A (TSO Y. FAN ET AL) * colonne 6, ligne 41 - ligne 59 * * colonne 2, ligne 66 - colonne 3, ligne 48; figure 1 * | 1-3 | |
| A,D | OTSUKA K: "ULTRAHIGH SENSITIVITY LASER DOPPLER VELOCIMETRY WITH A MICROCHIP SOLID-STATE LASER" APPLIED OPTICS, vol. 33, no. 6, 20 février 1994, pages 1111-1114, XP000434817 * le document en entier * | 1,6 | |
| A,D | OKAMOTO S ET AL: "ULTRAHIGHLY SENSITIVE LASER-DOPPLER VELOCITY METER WITH A DIODE-PUMPED ND:YVO4 MICROCHIP LASER" REVIEW OF SCIENTIFIC INSTRUMENTS, vol. 66, no. 5, mai 1995, pages 3116-3120, XP000195836 | 1 | DOMAINES TECHNIQUES RECHERCHES (Int.Cl.6) G01S G01P H01S |
| A | EP 0 235 034 A (ELECTRICITE DE FRANCE SERVICE NATIONAL) * page 7, ligne 19 - page 8, ligne 33; figure 3 * | 1 | |
| D | & US 4 928 152 A | | |
| A | EP 0 392 172 A (CARL ZEISS) * abrégé; revendication 1; figure 2 * | 1 | |

-/--

Le présent rapport a été établi pour toutes les revendications

| Lieu de la recherche | Date d'achèvement de la recherche | Examinateur |
|---|---|---|
| BERLIN | 14 octobre 1997 | Breusing, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 0 821 246 A1

# RAPPORT DE RECHERCHE EUROPEENNE

Office européen
des brevets

Numéro de la demande

EP 97 40 1750

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB 2 183 956 A (UNIVERSITY OF SOUTHAMPTON) <br> * abrégé; figure 1 * <br> --- | 11 | |
| A | GROOT DE P J ET AL: "RANGING AND VELOCIMETRY SIGNAL GENERATION IN A BACKSCATTER-MODULATED LASER DIODE" APPLIED OPTICS, <br> vol. 27, no. 21, 1 novembre 1988, <br> pages 4475-4480, XP000068781 <br> * le document en entier * <br> --- | 1 | |
| A | EP 0 448 751 A (W. SOHLER) <br> * abrégé; figure 1 * <br> ----- | | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| BERLIN | 14 octobre 1997 | Breusing, J |